# EUROPÄISCHE PATENTANMELDUNG

(11) **EP 2 518 276 A1**
(43) Veröffentlichungstag der Anmeldung: **31.10.2012**
(21) Anmeldenummer: 11164262.5
(22) Anmeldetag: 29.04.2011
(51) Int. Cl.: F01D 17/14, F16K 3/26, F16K 1/44, F16K 1/52

(54) **Kombiniertes Dampfturbinenventil mit integriertem Vorhubdesign**

(71) Anmelder: SIEMENS AKTIENGESELLSCHAFT, 80333 München (DE)
(72) Erfinder: Niederehe, Maximilian, 47259, Duisburg (DE); Whitear, Daniel, 45479, Mülheim (DE)

(57) **Zusammenfassung**

Die Erfindung betrifft ein kombiniertes Schnellschluss- und Stellventil für eine Frischdampfleitung einer Dampfturbine, wobei eine Zentralspindel (11) derart ausgebildet ist, dass eine Druckentlastung beim Öffnen des Schnellschlussventilkegels (7) dadurch entsteht, dass eine strömungstechnische Verbindung (16) zwischen einem Ausgangsraum (4) und einem Rückraum (17) gebildet wird.

## Beschreibung

Die Erfindung betrifft ein Stell-Schnellschluss-Ventil für eine Dampfturbine, mit einem Ventilgehäuse, an dem innenseitig ein Führungstopf vorsteht, dessen Achse mittig zu einem Ventilsitz des Stell-Schnellschluss-Ventils zeigt und in dem konzentrisch sowie in die Achsrichtung unabhängig voneinander längsverschiebbar ein Stellventilkegel und ein Schnellschlussventilkegel angeordnet sind, wobei der Stellventilkegel gegen den Führungstopf dampfdicht abgedichtet ist, wobei der Schnellschlussventilkegel gegen den Führungstopf dampfdicht abgedichtet ist, wobei das Stell-Schnellschluss-Ventil einen Eingangsdruckraum und einen gegenüber dem Eingangsdruckraum abdichtbaren Ausgangsdruckraum aufweist, wobei eine Zentralspindel zum Vorantrieb des Schnellschlussventilkegels in Richtung Ventilsitz ausgebildet ist.

Im Dampfturbinenbau werden Turbinenventile benötigt, die hohen thermischen und mechanischen Anforderungen genügen müssen. In einem Dampfkraftwerk kann im Dampferzeuger ein Dampf erzeugt werden, der vergleichsweise hohe Temperaturen und hohe Drücke aufweist. So kommen beispielsweise Temperaturen von über 620°C bei einem Druck von über 300bar vor. Solch hohe Temperaturen und Drücke stellen enorme Belastungen an die jeweiligen Bauteile der Dampfturbine als auch auf die Turbinenventile dar. In der Regel wird in einer Frischdampfleitung jeweils ein Schnellschluss- und ein Stell-Ventil angeordnet. Das Schnellschlussventil ist hierbei ständig geöffnet und das Stellventil regelt den Zufluss des Dampfes zur Dampfturbine hin. Es existieren Situationen, bei denen die Dampfzufuhr abrupt versperrt werden muss. In dieser Situation reagiert das Schnellschlussventil schlagartig und sperrt die Dampfzufuhr innerhalb von Millisekunden ab. Es ist bekannt, das Schnellschluss- und das Stellventil innerhalb eines Ventilgehäuses anzuordnen. Dies spart Bauraum und somit werden Fertigungs- und Herstellungskosten gespart.

Allerdings ist eine solch kompakte Bauweise in einem Ventilgehäuse konstruktionsbedingt komplizierter als separate Ausführungsformen mit jeweils einem Schnellschluss- und einem Stellventil. So stellt beispielsweise eine Herausforderung dar, ein geschlossenes Schnellschlussventil mit möglichst geringen Kräften wieder zu öffnen.

An dieser Stelle setzt die Erfindung an, deren Aufgabe es ist, ein Stell-Schnellschluss-Ventil anzugeben, das mit geringeren Kräften zum Öffnen des Schnellschlussventils auskommt.

Gelöst wird diese Aufgabe durch ein Stell-Schnellschluss-Ventil für eine Dampfturbine, mit einem Ventilgehäuse, an dem innenseitig ein Führungstopf vorsteht, dessen Achse mittig zu einem Ventilsitz des Stell-Schnellschluss-Ventil zeigt und in dem konzentrisch sowie in die Achsrichtung unabhängig voneinander längsverschiebbar ein Stellventilkegel und ein Schnellschlussventilkegel angeordnet sind, wobei der Stellventilkegel gegen den Führungstopf dampfdicht abgedichtet ist, wobei der Schnellschlussventilkegel gegen den Führungstopf dampfdicht abgedichtet ist, wobei das Stell-Schnellschluss-Ventil einen Eingangsdruckraum und einen gegenüber dem Eingangsdruckraum abdichtbaren Ausgangsdruckraum aufweist, wobei eine Zentralspindel zum Vorantrieb des Schnellschlussventilkegels in Richtung Ventilsitz ausgebildet ist.

Die Aufgabe wird des Weiteren gelöst durch ein Verfahren zum Betreiben eines Stell-Schnellschluss-Ventils, wobei das Stell-Schnellschluss-Ventil mit einem Schnellschlussventilkegel und einem Stellventilkegel innerhalb des Ventilgehäuses ausgebildet wird, wobei mit dem Stell-Schnellschluss-Ventil ein Eingangsdruckraum von einem Ausgangsdruckraum getrennt wird, wobei beim Öffnen des Schnellschlussventilkegels eine strömungstechnische Verbindung zwischen dem Ausgangsdruckraum und einem hinter den Schnellschlussventilkegel angeordneten Rückraum hergestellt wird.

Die Erfindung geht von dem Aspekt aus, dass bei der konstruktiven Ausführung von Dampfturbinenventilen, wobei das Stell- und Schnellschlussventil in einem Gehäuse ausgeführt sind vergleichsweise große Ventilkörper entstehen. Des Weiteren geht die Erfindung davon aus, dass beim Schließen eines Schnellschlussventils der Fall vorkommen kann, dass hinter dem Schnellschlussventilkegel ein Volumen freigegeben wird, ohne das Dampf nachströmen kann, was dazu führt, dass ein Unterdruck in diesen Rückraum ausgebildet wird, welcher das Kräftegleichgewicht soweit verändert, dass ein störungsfreies Schließen des Schnellschlussventilkegels verhindert werden würde. Erfindungsgemäß wird daher eine strömungstechnische Verbindung zwischen dem Rückraum, der hinter dem Schnellschlussventilkegel angeordnet ist und dem Ausgangsdruckraum ausgebildet. Das bedeutet, dass die Drücke zwischen diesen beiden Räumen gleich groß sind. Das bedeutet, dass dies ein Einfluss auf die aufzuwendenden Kräfte zur Bewegung des Schnellschlussventilkegels hat. Die Kräfte können daher geringer sein. Vorteilhafte Weiterbildungen sind in den Unteransprüchen angegeben. In einer vorteilhaften Weiterbildung wird die Zentralspindel derart ausgebildet, dass beim Schließen des Schnellschlussventilkegels die strömungstechnische Verbindung zwischen dem Rückraum und dem Ausgangsraum geschlossen ist. Somit lassen sich die Kräfte, die für das Schließen und das Öffnen des Schnellschlussventilkegels benötigt werden einzeln beeinflussen.

In einer weiteren vorteilhaften Weiterbildung ist der Führungstopf derart ausgebildet, dass eine zweite strömungstechnische Verbindung zwischen dem Rückraum und dem Eingangsdruckraum entsteht. Somit ist ein weiterer Parameter bereitgestellt, um die Kräfte auf den Schnellschlussventilkegel zu beeinflussen. In einer weiteren vorteilhaften Weiterbildung ist die Zentralspindel verschiebbar gegenüber dem Schnellschlussventilkegel ausgebildet. Das bedeutet, dass eine relative Bewegung zwischen der Zentralspindel und dem Schnellschlussventilkegel möglich ist. Insbesondere wird das hierbei ausgenutzt, um beim Öffnen und beim Schließen strömungstechnische Verbindungen herzustellen bzw. zu schließen.

In einer weiteren vorteilhaften Weiterbildung weist der Schnellschlussventilkegel einen ersten Druckausgleichskanal auf, der durch einen in der Zentralspindel ausgebildeten Vorhubkegel zum Schließen des Schnellschlussventils verschließbar und beim Öffnen des Schnellschlussventils wiederöffnenbar ist, wobei der erste Druckausgleichskanal die strömungstechnische Verbindung zwischen dem Druckraum und dem Ausgangsraum bildet. Somit wird in vorteilhafter Weise konstruktiv ausgenutzt, dass im Schnellschlussventilkegel selbst eine strömungstechnische Verbindung hergestellt werden kann, die durch eine relative Bewegung zwischen dem Vorhubkegel und dem Schnellschlussventilkegel realisiert wird.

In einer weiteren vorteilhaften Weiterbildung weist der Führungstopf einen zweiten Druckausgleichskanal auf, der die zweite strömungstechnische Verbindung zwischen dem Rückraum und dem Eingangsdruckraum bildet. Somit kann ebenfalls in einer einfachen konstruktiven Weise eine strömungstechnische Verbindung zwischen dem Rückraum und dem Eingangsdruckraum hergestellt werden. Dies wird durch einfach ausgebildete Kanäle in dem Führungstopf realisiert.

In einer weiteren vorteilhaften Weiterbildung ist der Schnellschlussventilkegel innenseitig an dem Führungstopf angeordnet. Das bedeutet, dass der Schnellschlussventilkegel und somit das Schnellschlussventil innerhalb und das Stellventil um das Schnellschlussventil herum angeordnet ist.

In vorteilhaften Weiterbildungen ist der Schnellschlussventilkegel mit ersten Kolbenringen gegenüber dem Führungstopf dampfdicht ausgebildet.

Genauso wird in vorteilhafter Weise der Stellventilkegel mittels des zweiten Kolbenrings gegenüber dem Führungstopf dampfdicht ausgebildet.

Ausführungsbeispiele der Erfindung werden nachfolgend anhand der Zeichnung beschrieben. Diese sollen die Ausführungsbeispiele nicht maßstäblich darstellen, vielmehr ist die Zeichnung in schematisierter und/oder leicht verzerrter Form ausgeführt. Im Hinblick auf Ergänzungen der aus der Zeichnung mittelbar erkennbaren Lehren wird hier auf den einschlägigen Stand der Technik verwiesen.

Im Einzelnen zeigt die Zeichnung in:

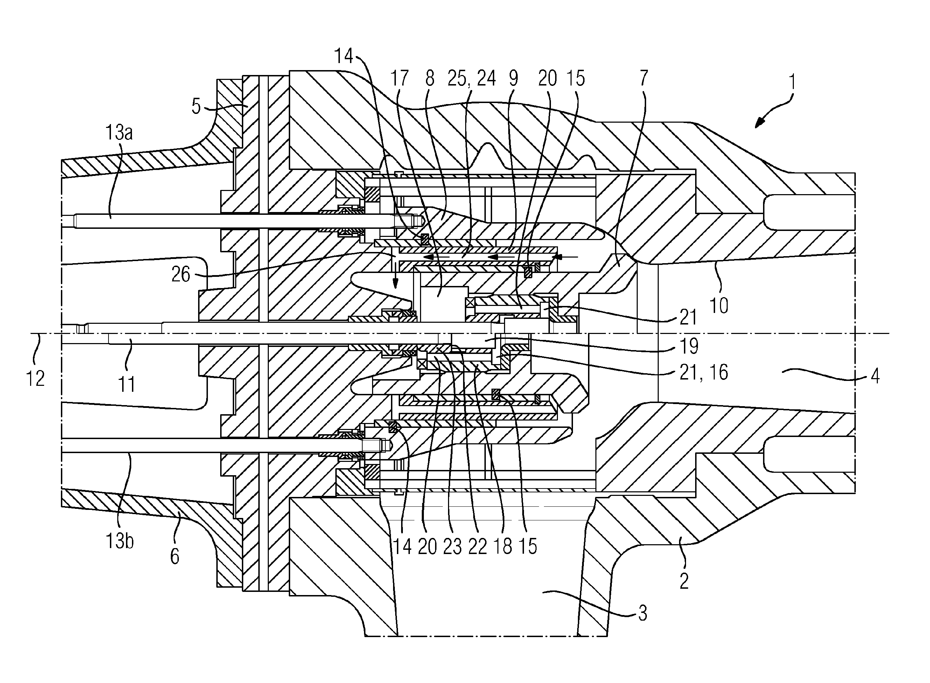

- Figur 1: eine Querschnittsansicht eines Stell-Schnellschluss-Ventils.

In der Figur 1 ist ein Stell-Schnellschluss-Ventil 1 in einer Querschnittsansicht dargestellt. Das Stell-Schnellschluss-Ventil 1 umfasst im Wesentlichen ein Ventilgehäuse 2, wobei innerhalb des Ventilgehäuses 2 das kombinierte Schnellschluss- und Stell-Ventil angeordnet ist. Innerhalb des Ventilgehäuses 2 ist ein Eingangsdruckraum 3 und ein Ausgangsdruckraum 4 angeordnet. In den Eingangsdruckraum 3 strömt ein Dampf ein und wird in den Ausgangsdruckraum 4 umgeleitet. Bei einer vollständigen Öffnung des Stell-Schnellschluss-Ventils 1 ändern sich die thermodynamischen Größen des Frischdampfes auf dem Weg vom Eingangsdruckraum 3 zum Ausgangsdruckraum 4 kaum.

In dem in Figur 1 dargestellten Beispiel erfolgt eine Umlenkung des Frischdampfes vom Eingangsdruckraum 3 zum Ausgangsdruckraum 4 um 90°.

An dem Ventilgehäuse 2 wird ein Aufnahmeelement 5 angeordnet. Dieses Aufnahmeelement 5 wird über geeignete Verbindungen dampfdicht mit dem Ventilgehäuse 2 verbunden. Das Ventilgehäuse 6 ist zum Aufnehmen eines Antriebs für die Ventilspindeln ausgebildet.

Zwischen dem Eingangsdruckraum 3 und dem Ausgangsdruckraum 4 ist ein Schnellschlussventilkegel 7 und ein Stellventilkegel 8 angeordnet. Zwischen dem Schnellschlussventilkegel 7 und dem Stellventilkegel 8 ist ein Führungstopf 9 angeordnet, der im Ventilgehäuse innenseitig vorsteht. Der Führungstopf 9 ist integral mit dem Aufnahmeelement 5 ausgebildet.

Innerhalb des Ventilgehäuses 2 ist ein Ventilsitz 10 ausgebildet, an dem der Schnellschlussventilkegel 7 und der Stellventilkegel 8 in Kontakt bringbar ist. Der Ventilsitz 10 ist ein separates Bauelement, das innerhalb des Ventilgehäuses 2 über geeignete Mittel angebracht werden kann. Sowohl der Schnellschlussventilkegel 7 als auch der Stellventilkegel 8 sind an diesem Ventilsitz 10 angeordnet. Der Führungstopf 9 ist mittig zu diesem Ventilsitz 10 ausgebildet. Der Schnellschlussventilkegel 7 und der Stellventilkegel 8 sind konzentrisch um den Führungstopf 9 in die Achsrichtung 12 unabhängig voneinander längst verschiebbar ausgebildet. Dazu ist eine Zentralspindel 11 vorgesehen, die in der Achsrichtung 12 verschiebbar ist und eine Kraft auf den Schnellschlussventilkegel 7 ausüben kann. Des Weiteren sind, wie in Figur 1 dargestellt, zwei Antriebsspindeln 13a und 13b dargestellt, die eine Kraft auf den Stellventilkegel 8 in Achsrichtung 12 ausüben können. In alternativen Ausführungsformen können drei auf dem Umfang verteilte Antriebsspindeln eingesetzt werden.

Der Stellventilkegel 8 ist gegen den Führungstopf 9 dampfdicht abgedichtet. Dies erfolgt über eine zweite Kolbenringpaarung 14. Der Schnellschlussventilkegel 7 ist ebenfalls gegen den Führungstopf 9 mit einer ersten Kolbenringpaarung 15 dampfdicht abgedichtet werden.

Der Eingangsdruckraum 13 ist mittels des Schnellschlussventilkegels 7 und dem Stellventilkegel 8 abdichtbar gegenüber dem Ausgangsdruckraum 4 ausgebildet.

Die Zentralspindel 11 ist derart ausgebildet, dass beim Öffnen des Schnellschlussventilkegels 7 eine strömungstechnische Verbindung 16 zwischen einem Rückraum 17, der hinter dem Schnellschlussventilkegel 7 angeordnet ist, und dem Ausgangsdruckraum 4 entsteht. Wie in Figur 1 zu sehen, wird dies folgendermaßen realisiert:

An den Schnellschlussventilkegel 7 ist ein weiteres Bauelement 18 angepasst, wobei in diesem weiteren Bauelement 18 die strömungstechnische Verbindung 16 realisiert ist. Die strömungstechnische Verbindung 16 entsteht hierbei durch eine relative Bewegung zwischen einem mit der Zentralspindel 11 verbundenen Zentralspindelkegel 19 und dem weiteren Bauelement 18. Die strömungstechnische Verbindung 16 umfasst hierbei ein parallel zur Achsrichtung 12 angeordneten ersten Strömungskanal 20 und einen im Wesentlichen senkrecht dazu angeordneten zweiten Strömungskanal 21. Der erste Strömungskanal 20 mündet in den Rückraum 17. Der zweite Strömungskanal 21 mündet in den Ausgangsraum 4. Der erste Strömungskanal 20 und der zweite Strömungskanal 21 sind strömungstechnisch miteinander verbunden. Sofern sich die Zentralspindel 11 nach links bewegt, wird ebenso der Zentralspindelkegel 19 ebenfalls nach links bewegt und öffnet die strömungstechnische Verbindung zwischen dem zweiten Strömungskanal 21 und dem Außendruckraum 4. Diese Öffnung wird begrenzt durch eine Anschlag 22, der durch einen Vorsprung 23 im weiteren Bauelement 18 realisiert ist. Der Vorsprung 23 und der Zentralspindelkegel 19 stoßen quasi aufeinander. Eine weitere Bewegung der Zentralspindel 19 nach links zieht den Schnellschlussventilkegel 7 ebenfalls mit nach links. Dieser Vorgang ist in der Figur 1 in der unter der Achsrichtung 12 dargestellten Anordnung innerhalb des Ventilgehäuses 2 zu sehen.

Oberhalb der Achsrichtung 12 ist der Vorgang während des Schließens des Schnellschlussventilkegels 7 dargestellt. Hierbei ist zu sehen, dass der Zentralspindelkegel 19, der relativ zum weiteren Bauelement 18 bewegt werden kann, die strömungstechnische Verbindung zwischen dem zweiten Strömungskanal 21 und dem Außendruckraum 4 verschließt. Eine weitere Bewegung der Zentralspindelkegel 19 nach rechts bewegt den Schnellschlussventilkegel 7 ebenfalls nach rechts bis zum Ventilsitz 10. Durch die strömungstechnische Verbindung 16 während des Öffnens ist ein Druckausgleich zwischen dem Ausgangsdruckraum 4 und dem Rückraum 17 möglich. Das bedeutet, dass der Druck gleich ist zwischen dem Außendruckraum 4 und dem Rückraum 17.

Der Führungstopf 9 ist des Weiteren derart ausgebildet, dass in dieser eine zweite strömungstechnische Verbindung 24 zwischen dem Rückraum 17 und dem Eingangsdruckraum 3 entsteht, wenn das Stellventil geöffnet ist. Dazu wird im Wesentlichen parallel zur Achsrichtung 12 ein dritter Strömungskanal 25 und ein senkrecht dazu angeordneter vierter Strömungskanal 26 ausgebildet. Der dritte Strömungskanal 25 mündet in den Eingangsdruckraum 3 und der vierte Strömungskanal 26 mündet in den Rückraum 17. Der erste Strömungskanal 20 und der zweite Strömungskanal 21 können auch als Druckausgleichskanal bezeichnet werden.

So wird ein Druckausgleich geschaffen, welche zum einwandfreien Schließen des Schnellschlussventilkegels notwendig ist, da sich hinter dem Kegel ein Unterdruck einstellen würde, welche das Schließen einschränken bzw. behindern würde.

Die strömungstechnische Verbindung 24 kann auch als zweiter Druckausgleichskanal bezeichnet werden.

Es werden dadurch zwei Arbeitsräume (Eingangsdruckraum 23 und Eingangsdruckraum 4) ausgebildet. Durch den Zentralspindelkegel 19 wird der Schnellschlussventilkegel 7 des Schnellschlussventils druckentlastet. Im geschlossenen Zustand wirken große Dampfkräfte auf den Schnellschlussventilkegel 7, welcher aus der Druckdifferenz vor dem Schnellschlussventilkegel 7 und hinter dem Schnellschlussventilkegel 7 resultieren. Um den Schnellschlussventilkegel 7 gegen diese Dampfkräfte zu Öffnen müsste ein sehr großer Antrieb verwendet werden. Um dies zu vermeiden, wird der Schnellschlussventilkegel 7 mit einem Zentralspindelkegel 19 ausgeführt. Beim Öffnen wird zuerst der verhältnismäßig kleine Zentralspindelkegel 19 geöffnet und sorgt damit für einen Druckausgleich über den Zentralspindelkegel 19. Danach wird der Schnellschlussventilkegel 7 geöffnet. Da beim Schließen zunächst der Zentralspindelkegel 19 schließt und damit die Dampfzufuhr des Rückraums 17 unterbindet, entsteht das Problem, dass über die Kolbenringe kein Dampf hinter den Schnellschlussventilkegel 7 strömen kann, so dass sich unter Freigabe des Volumens im Rückraum des Schnellschlussventilkegels 7 ein Unterdruck ausbildet. Hierdurch wird das Kräftegleichgewicht soweit geändert, dass ein störungsfreies Schließen des Schnellschlussventilkegels 7 verhindert werden würde. Dies wird umgangen, indem die zweite strömungstechnische Verbindung 24 eine permanente Dampfzufuhr garantiert.

Insgesamt entsteht eine Verkleinerung der auf die Stellventilkegel 8 und Schnellschlussventilkegel 7 wirkenden Dampfkräfte. Durch die Reduzierung der Dampfkräfte verkleinern sich die Antriebskräfte und die mechanische Belastung der Ventilspindeln sinkt insgesamt. Dadurch können kleinere und günstigere Antriebe und Ventilbauteile verwendet werden.

## Patentansprüche

1. Stell-Schnellschluss-Ventil (1) für eine Dampfturbine, mit einem Ventilgehäuse (2), an dem innenseitig ein Führungstopf (9) vorsteht, dessen Achse mittig zu einem Ventilsitz (10) des Stell-Schnellschluss-Ventils (1) zeigt und in dem konzentrisch sowie in die Achsrichtung (12) unabhängig voneinander längsverschiebbar ein Stellventilkegel (8) und ein Schnellschlussventilkegel (7) angeordnet sind,
wobei der Stellventilkegel (8) gegen den Führungstopf (9) dampfdicht abgedichtet ist,
wobei der Schnellschlussventilkegel (7) gegen den Führungstopf (9) dampfdicht abgedichtet ist,
wobei das Stell-Schnellschluss-Ventil (1) einen Eingangsdruckraum (3) und einen gegenüber dem Eingangsdruckraum (3) abdichtbaren Ausgangsdruckraum (4) aufweist,
wobei eine Zentralspindel (11) zum Vorantrieb des Schnellschlussventilkegels (7) in Richtung Ventilsitz (10) ausgebildet ist,
**dadurch gekennzeichnet, dass**
die Zentralspindel (11) derart ausgebildet ist, dass beim Öffnen des Schnellschlussventilkegels (7) eine strömungstechnische Verbindung (16) zwischen dem Rückraum (17), der hinter dem Schnellschlussventilkegel (7) angeordnet ist, und dem Ausgangsdruckraum (4), entsteht.

2. Stell-Schnellschluss-Ventil (1) nach Anspruch 1,
wobei die Zentralspindel (11) derart ausgebildet ist, dass beim Schließen des Schnellschlussventilkegels (7) die strömungstechnische Verbindung (16) zwischen dem Rückraum (17) und dem Ausgangsraum (4) geschlossen ist.

3. Stell-Schnellschluss-Ventil (1) nach Anspruch 1 oder 2, wobei der Führungstopf (9) derart ausgebildet ist, dass eine zweite strömungstechnische Verbindung (24) zwischen dem Rückraum (17) und dem Eingangsdruckraum (3) entsteht.

4. Stell-Schnellschluss-Ventil (1) nach Anspruch 1, 2 oder 3,
wobei die Zentralspindel (11) verschiebbar gegenüber dem Schnellschlussventilkegel (7) ausgebildet ist.

5. Stell-Schnellschluss-Ventil (1) nach Anspruch 4,
wobei der Schnellschlussventilkegel (7) einen ersten Druckausgleichskanal aufweist, der durch einen in der Zentralspindel (11) ausgebildeten Vorhubkegel beim Schließen des Schnellschlussventils verschließbar und beim Öffnen des Schnellschlussventils wiederöffnenbar ist, wobei der erste Strömungskanal (20) die strömungstechnische Verbindung (16) zwischen dem Rückraum (17) und dem Ausgangsraum (4) bildet.

6. Stell-Schnellschluss-Ventil (1) nach einem der vorhergehenden Ansprüche,
wobei der Führungstopf (9) einen zweiten Druckausgleichskanal aufweist, der die zweite strömungstechnische Verbindung (24) zwischen dem Rückraum (17) und dem Eingangsdruckraum (3) bildet.

7. Stell-Schnellschluss-Ventil (1) nach einem der vorhergehenden Ansprüche,
wobei der Schnellschlussventilkegel (7) innenseitig an dem Führungstopf (9) angeordnet ist.

8. Stell-Schnellschluss-Ventil (1) nach einem der vorhergehenden Ansprüche,
wobei der Schnellschlussventilkegel (7) mittels der dritten Kolbenringpaar (15) gegenüber dem Führungstopf (9) dampfdicht ausgebildet ist.

9. Stell-Schnellschluss-Ventil (1) nach einem der vorhergehenden Ansprüche,
wobei der Stellventilkegel (8) mittels der zweiten Kolbenringpaarung (14) gegenüber dem Führungstopf (9) ausgebildet ist.

10. Stell-Schnellschluss-Ventil (1) nach einem der vorhergehenden Ansprüche,
wobei der Stellventilkegel (8) außenseitig an den Führungstopf (9) angeordnet ist.

11. Verfahren zum Betreiben eines Stell-Schnellschlussventils (1),
wobei das Stell-Schnellschlussventil (1) mit einem Schnellschlussventilkegel (7) und einem Stellventilkegel (8) innerhalb eines Ventilgehäuses (2) ausgebildet wird, wobei mit Stell-Schnellschlussventil (1) ein Eingangsdruckraum (3) von einem Ausgangsdruckraum (4) getrennt wird,
wobei beim Öffnen des Schnellschlussventilkegels (7) eine strömungstechnische Verbindung (16) zwischen dem Ausgangsdruckraum (4) und einem hinter dem Schnellschlussventilkegel (7) angeordneten Rückraum (17), hergestellt wird,
wobei der Stellventilkegel (8) geöffnet ist.

12. Verfahren nach Anspruch 11,
wobei beim Schließen eine strömungstechnische Verbindung (16) zwischen dem Eingangsraum (3) und dem Rückraum (17) hergestellt wird.
